# EUROPÄISCHE PATENTANMELDUNG

(11) **EP 1 731 628 A1**
(43) Veröffentlichungstag der Anmeldung: **13.12.2006**
(21) Anmeldenummer: 05012237.3
(22) Anmeldetag: 07.06.2005
(51) Int. Cl.: C23C 4/18, C23C 4/08, C22F 1/10, F01D 5/00

(54) **Verfahren zum Erhöhen der Wandstärke eines aus einer hochwarmfesten Legierung hergestellten Bauteils**

(71) Anmelder: SIEMENS AKTIENGESELLSCHAFT, 80333 München (DE)
(72) Erfinder: Birkner, Jens, 45481 Mülheim an der Ruhr (DE); Stamm, Werner, Dr., 45481 Mülheim an der Ruhr (DE)

(57) **Zusammenfassung**

Es wird ein Verfahren zum Erhöhen der Wandstärke eines aus einer hochwarmfesten Legierung hergestellten Bauteils, zur Verfügung gestellt, in welchem Beschichtungsmaterial auf eine Bauteilwand (1) aufgebracht wird, wobei das Beschichtungsmaterial beim Aufbringen auf die Bauteilwand (1) ein feinkörniges Gefüge aufweist, und anschließend eine Wärmebehandlung erfolgt, deren Temperatur und Haltedauer derart gewählt ist, dass im aufgebrachten Legierungsmaterial ein grobkörniges Gefüge entsteht.

## Beschreibung

Die vorliegende Erfindung betrifft ein Verfahren zum Erhöhen der Wandstärke eines Bauteils.

Eine ganze Reihe von Turbinenbauteilen sind im Betrieb einer Gasturbine sehr hohen Temperaturen ausgesetzt. Beispiele hierfür sind Turbinenschaufeln und Hitzeschildelemente in der Brennkammer. Insbesondere die Turbinenschaufeln sind außer hohen thermischen Belastungen auch hohen mechanischen Belastungen ausgesetzt (Fliehkräfte, mechanische Verspannungen, etc).

Um die Bauteile vor zu hoher thermischer Belastung zu schützen, sind diese häufig mit einer Wärmedämmschicht (TBC, thermal barrier coating) versehen, die mittels einer so genannten MCrAlX-Schicht an das Basismaterial der Turbinenschaufel angebunden ist. Unter dem Ausdruck MCrAlX ist hierbei eine Legierung zu verstehen, die Chrom (Cr) und Aluminium (Al) umfasst und in der X = Y für Yttrium oder ein Element der seltenen Erden und M für Eisen (Fe), Kobalt (Co) oder Nickel (Ni) stehen. Andere Zusatzelemente sind ebenfalls möglich.

Die Wärmedämmschicht ist im Betrieb der Gasturbinenanlage in der Regel unmittelbar den heißen Verbrennungsabgasen ausgesetzt, sodass sie einem starken Verschleiß unterworfen ist. Die mit der Beschichtung versehenen Turbinenbauteile sind daher in regelmäßigen Abständen zu warten und gegebenenfalls aufzubereiten, d.h. die Beschichtung ist abzutragen und eine neue Beschichtung aufzubringen. Beim Abtragen der Beschichtung lässt es sich jedoch zumeist nicht vermeiden, dass ein gewisser Teil des unter der Beschichtung liegenden Legierungsmaterials des Bauteils abgetragen wird. Auch ein lokal erhöhter Angriff durch die Verbrennungsabgase kann zu einem verstärkten Abtrag führen. Dies kann bspw. durch vorzeitiges Versagen der Wärmedämmschicht oder durch Anfangsinhomogenitäten der MCrAlX-Schicht bedingt sein.

Das Bauteil mit geringerer Wandstärke weist jedoch gegenüber dem Zustand nach Neuherstellung eine geringere thermische und mechanische Belastbarkeit auf. Aus diesem Grund werden derart wiederaufbereitete Bauteile nicht in denjenigen Bereichen einer Gasturbinenanlage eingesetzt, in denen besonders hohe thermische und mechanische Belastungen auftreten.

Die JP 2000-096206 A2 sowie die JP 11140616 A2 offenbaren die Wärmebehandlung einer MCrAlX-Schicht bei hohen Temperatur.

Aufgabe der vorliegenden Erfindung ist es daher, ein Verfahren zum Erhöhen der Wandstärke eines Bauteils, insbesondere eines Gasturbinenbauteils, zur Verfügung zu stellen mit dem sich eine gegenüber dem Stand der Technik höhere Belastungsfähigkeit der verstärkten Wand erzielen lässt.

Diese Aufgabe wird durch ein Verfahren zum Erhöhen der Wandstärke eines Bauteils nach Anspruch 1 gelöst.

Die abhängigen Ansprüche enthalten vorteilhafte Ausgestaltungen des erfindungsgemäßen Verfahrens, die beliebig in vorteilhafter Weise miteinander kombiniert werden.

Im erfindungsgemäßen Verfahren zum Erhöhen der Wandstärke eines aus einem Legierungsmaterial hergestellten Bauteils wird Beschichtungsmaterial auf eine Bauteilwand aufgebracht. Nach dem Aufbringen auf die Bauteilwand weist das Beschichtungsmaterial ein feinkörniges Gefüge auf. Nachdem das Beschichtungsmaterial auf die Bauteilwand aufgebracht ist, erfolgt eine Wärmebehandlung, deren Temperatur- und Haltedauer derart gewählt ist, dass im aufgebrachten Beschichtungsmaterial ein grobkörniges Gefüge entsteht.

Aufgrund des feinkörnigen Gefüges des Beschichtungsmaterials kann dieses besonders einfach auf die Bauteilwand aufgebracht werden. Das feinkörnige Gefüge führt jedoch bei den hohen Einsatztemperaturen zu einem duktilen Zustand, in dem das aufgebrachte Material superplastisches Verhalten zeigt, wie dies im Stand der Technik der Fall ist.
Im superplastischen Material ist die Kriechfestigkeit gering. Das Beschichtungsmaterial weist einen Übergang zwischen einem duktilen Zustand und einem spröden Zustand mit hoher Kriechfestigkeit auf. Der duktile Zustand stellt sich bei Vorliegen eines feinkörnigen Gefüges ein, wohingegen sich der spröde Zustand bei Vorliegen einer grobkörnigen Struktur einstellt. Im erfindungsgemäßen Verfahren wird das aufgebrachte superplastische Beschichtungsmaterial mittels der Wärmebehandlung in den grobkörnigen Zustand überführt, in welchem das Material auch bei hohen Einsatztemperaturen eine hohe Kriechfestigkeit aufweist. Dadurch werden die mechanischen Eigenschaften des aufgebrachten Beschichtungsmaterials soweit verbessert, dass das wiederaufbereitete Bauteil auch in höher beanspruchten Bereichen, beispielsweise in Turbinenschaufeln einer Gasturbinenanlage, eingesetzt werden kann.

Die zum Herbeiführen des grobkörnigen Gefüges notwendigen Temperaturen und Haltezeiten hängen unter anderem von der Materialzusammensetzung, der Korngröße im feinkörnigen Zustand und gegebenenfalls auch von der Vorgeschichte des Beschichtungsmaterials ab. Die Temperaturen und Haltezeiten sind daher für die jeweils verwendete Materialzusammensetzung empirisch zu ermitteln. Die Zusammenhänge zwischen einer Wärmebehandlung und des Entstehens eines grobkörnigen Gefüges sind beispielsweise in EP 0 045 984 B1 und in EP 0 398 121 B1 beschrieben.

Die in der Wärmebehandlung zur Anwendung kommenden Temperaturen liegen jedoch auf jeden Fall unterhalb der Solidustemperatur, also derjenigen Temperatur, bei welcher das Material anfängt vom festen in den flüssigen Zustand überzugehen. Vorzugsweise liegt die bei der Wärmebehandlung zur Anwendung kommende Temperatur ca. 10°C bis 50°C unterhalb der Solidustemperatur.

Da das Beschichtungsmaterial vor der Wärmebehandlung ein feinkörniges Gefüge aufweist, eignet es sich insbesondere zum Aufbringen mittels eines Spritzverfahrens. Als Spritzverfahren sind beispielsweise Plasmaspritzen oder thermisches Spritzen geeignet. Das Plasmaspritzen kann hierbei im Vakuum (VPS, Vacuum Plasma Spraying) oder bei niedrigem Druck (LPPS, Low Pressure Plasma Spraying) erfolgen. Als thermisches Spritzverfahren kann insbesondere Hochgeschwindigkeits-Flammenspritzen zur Anwendung kommen, in dem ein Luft/Brennstoffgemisch verbrannt wird und das Beschichtungspulver von den mit hoher Geschwindigkeit aus einer Spritzdüse strömenden Verbrennungsabgasen in Richtung auf die Bauteilwand mitgenommen wird.

Das erfindungsgemäße Verfahren eignet sich auch zum Wiederaufbereiten eines Bauteils, nachdem ein Schichtmaterial vom Bauteil abgetragen worden ist, beispielsweise MCrAlX von einem Gasturbinenbauteil, und sich die Wandstärke des Bauteils beim Abtragen wenigstens lokal verringert hat. Das Turbinenbauteil kann insbesondere eine Turbinenschaufel sein.

In einer Weiterbildung des erfindungsgemäßen Verfahrens, die sich ebenfalls zur Anwendung beim Wiederaufbereiten von Bauteilen eignet, wird nach dem Durchführen der Wärmebehandlung eine Beschichtung auf die in ihrer ursprünglichen Wandstärke wiederhergestellte Wand aufgebracht. Als Beschichtung kann beispielsweise eine wärmedämmende Beschichtung, etwa eine MCrAlX-Beschichtung mit darüber aufgebrachter Zirkonoxidschicht (Zirkonoxid: ZrO₂), auf ein Gasturbinenbauteil aufgebracht werden, das insbesondere eine Turbinenschaufel sein kann.

Weitere Merkmale, Eigenschaften und Vorteile der vorliegenden Erfindung ergeben sich aus der nachfolgenden Beschreibung eines Ausführungsbeispiels unter Bezugnahme auf die beiliegenden Figuren.
- Figur 1: zeigt in einer schematischen Darstellung einen Ausschnitt aus einer beschichteten Gasturbinenschaufel vor der Wiederaufarbeitung.
- Figur 2: zeigt den Ausschnitt aus Figur 1 nach Entfernen der Beschichtung.
- Figur 3: zeigt den Ausschnitt aus Figur 2 nach dem Aufbringen eines artgleichen Materials.
- Figur 4: zeigt den Ausschnitt aus Figur 3 nach Durchführen einer Wärmebehandlung.
- Figur 5: zeigt den Ausschnitt aus Figur 4 nach dem Aufbringen einer neuen Beschichtung.
- Fig. 6: zeigt beispielhaft eine Gasturbine in einem Längsteilschnitt.
- Fig. 7: zeigt in perspektivischer Ansicht eine Laufschaufel oder Leitschaufel einer Strömungsmaschine.
- Fig. 8: zeigt eine Brennkammer einer Gasturbine.

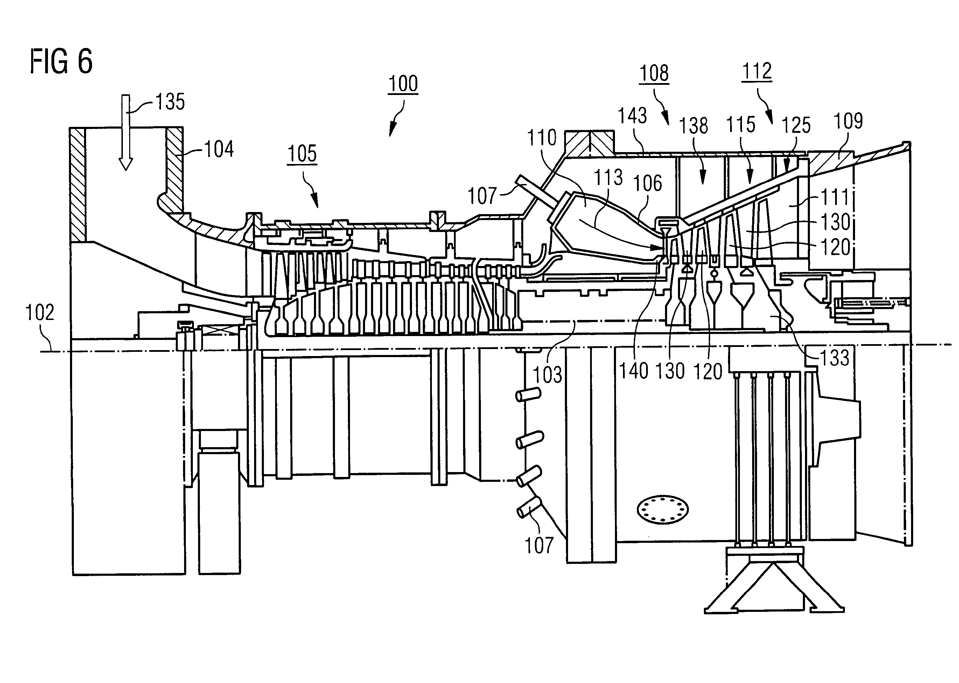

Die Figur 6 zeigt beispielhaft eine Gasturbine 100 in einem Längsteilschnitt. Die Gasturbine 100 weist im Inneren einen um eine Rotationsachse 102 drehgelagerten Rotor 103 auf, der auch als Turbinenläufer bezeichnet wird. Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.

Die Ringbrennkammer 106 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet. Solche Superlegierungen sind beispielsweise aus der EP 1 204 776 B1, EP 1 306 454, EP 1 319 729 A1, WO 99/67435 oder WO 00/44949 bekannt; diese Schriften sind Teil der Offenbarung.

Ebenso können die Schaufeln 120, 130 Beschichtungen gegen Korrosion (MCrA1X; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der MCrAlX kann noch eine Wärmedämmschicht vorhanden sein, und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

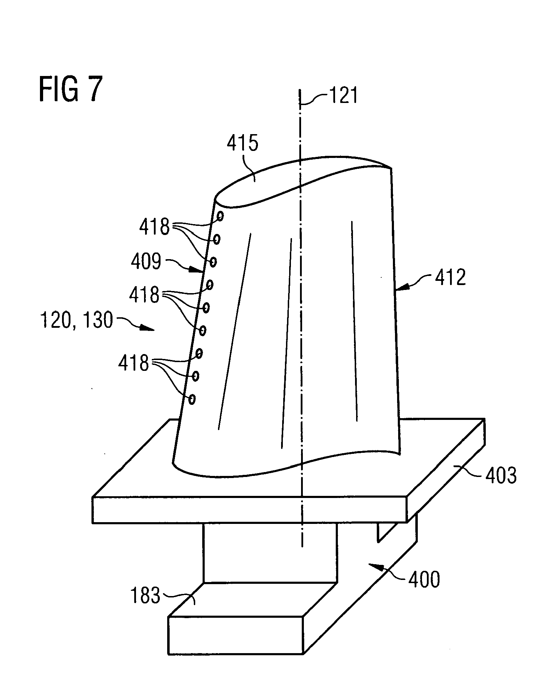

Figur 7 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf. Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet. Solche Superlegierungen sind beispielsweise aus der EP 1 204 776 B1, EP 1 306 454, EP 1 319 729 A1, WO 99/67435 oder WO 00/44949 bekannt; diese Schriften sind Teil der Offenbarung. Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind. Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt. Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures). Solche Verfahren sind aus der US-PS 6,024,792 und der EP 0 892 090 A1 bekannt; diese Schriften sind Teil der Offenbarung.

Ebenso können die Schaufeln 120, 130 Beschichtungen gegen Korrosion oder Oxidation (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der MCrAlX kann noch eine Wärmedämmschicht vorhanden sein und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

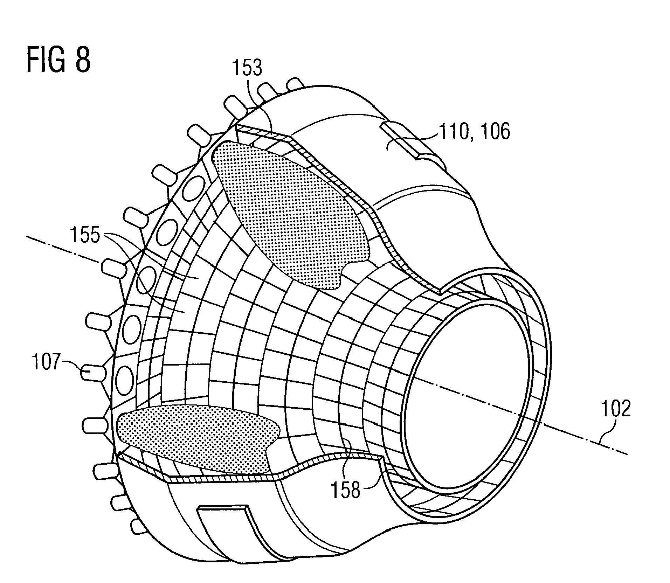

Die Figur 8 zeigt eine Brennkammer 110 einer Gasturbine. Die Brennkammer 110 ist beispielsweise als so genannte Ringbrennkammer ausgestaltet, bei der eine Vielzahl von in Umfangsrichtung um die Rotationsachse 102 herum angeordneten Brennern 107 in einen gemeinsamen Brennkammerraum münden. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 ist arbeitsmediumsseitig mit einer besonders hitzebeständigen Schutzschicht ausgestattet oder aus hochtemperaturbeständigem Material gefertigt. Dies können massive keramische Steine oder Legierungen mit MCrAlX und/oder keramischen Beschichtungen sein. Die Materialien der Brennkammerwand und deren Beschichtungen können ähnlich der Turbinenschaufeln sein.

Aufgrund der hohen Temperaturen im Inneren der Brennkammer 110 kann zudem für die Hitzeschildelemente 155 bzw. für deren Halteelemente ein Kühlsystem vorgesehen sein.

Die Brennkammer 110 ist insbesondere für eine Detektion von Verlusten der Hitzeschildelemente 155 ausgelegt. Dazu ist zwischen der Brennkammerwand 153 und den Hitzeschildelementen 155 eine Anzahl von Temperatursensoren 158 positioniert.

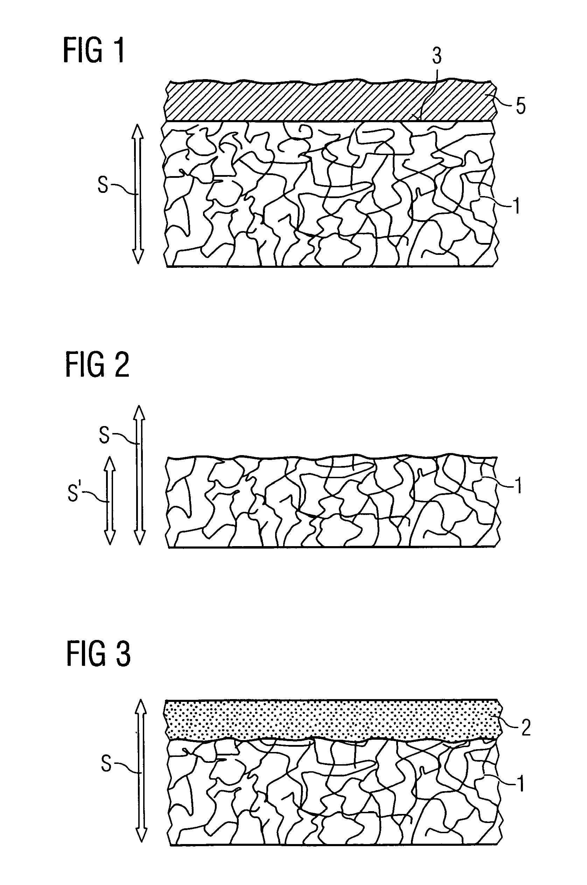

Das Wiederaufarbeiten (Refurbishment) einer gebrauchten Gasturbinenschaufel wird nachfolgend mit Bezug auf die Figuren 1 bis 5 beschrieben.

Figur 1 zeigt einen Ausschnitt aus einer gebrauchten Turbinenschaufel in einer schematischen Darstellung.

Im Ausschnitt sind die Wand 1 und eine auf der Oberfläche 3 der Wand 1 befindliche wärmedämmende Beschichtung 5 zu erkennen. Von der wärmedämmenden Beschichtung 5 ist der Einfachheit halber lediglich die MCrAlX-Schicht dargestellt.

Die Wand 1 hat eine Wandstärke S und eine grobkörnige Struktur. Sie ist aus einem Nickel-Basismaterial, das eine hochwarmfeste Legierung darstellt, hergestellt. Der grobkörnige Gefügezustand der Wand 1 sorgt dafür, dass das Wandmaterial der Turbinenschaufel eine hohe Kriechfestigkeit bei hohen Temperaturen aufweist. Die hochwarmfesten Legierungen werden auch Superlegierungen genannt. Außer Nickel-Basislegierungen können auch andere Basislegierungen, beispielsweise Kobalt-Basislegierungen oder Eisen-Basislegierungen zur Anwendung kommen.

Das Wiederaufarbeiten der Turbinenschaufel umfasst das Neuaufbringen einer wärmedämmenden Beschichtung 5' (vgl. Fig. 5). Hierzu muss zuvor die alte Beschichtung 5 abgetragen werden. Beim Abtragen wird auch ein Teil der Wand 1, d.h. ein Teil der Nickel-Basislegierung, abgetragen, sodass sich die Wandstärke von S zu S' verringert, wie dies in Figur 2 dargestellt ist. Da die korrekte Wandstärke der Schaufel jedoch von hoher Bedeutung ist, kann die Abweichung der Maße der Wandstärke von den Zeichnungsmaßen nicht hingenommen werden. Es erfolgt daher ein Aufspritzen eines Beschichtungsmaterials in Form eines feinkörnigen Pulvers.
Vorzugsweise entspricht die Zusammensetzung im Wesentlichen dem des Legierungsmaterials der Wand 1.

"Im Wesentlichen" bedeutet hier, dass die Zusammensetzung des Beschichtungsmaterials zumindest alle Legierungselemente mit Anteilen des Legierungsmaterials größer 1wt% aufweist, wobei die Zusammensetzung leicht variieren kann.
Vorzugsweise kann das Beschichtungsmaterial ausschließlich alle Legierungselemente des Legierungsmaterials aufweisen und hat nur leicht veränderte Werte für die einzelnen Elemente des Legierungsmaterials. Als weitere Alternative kann das Beschichtungsmaterial gegenüber dem Legierungsmaterial Zusätze bis 2wt% aufweisen, die zu dem Legierungsmaterial hinzugefügt werden, d.h. man nimmt 98wt% des Legierungsmaterials und fügt dem bis zu 2wt% zumindest eines Zusatzes (Metall, Legierung oder andere Verbindungen) hinzu.

Zur Erhöhung der Wandstärke kann auch dasselbe Material (Legierungsmaterial) verwendet werden, wie es für die Wand 1 verwendet wird.

Alternativ kann auch eine MCrAlX-Legierung verwendet werden.

Das Aufspritzen erfolgt solange, bis die ursprüngliche Wandstärke S wieder hergestellt ist (vgl. Figur 3). Wird eine MCrAlX-Legierung zur Wandstärkenerhöhung benutzt, so kann in einem Arbeitsgang weiterhin eine Schutzschicht aus MCrAlX aufgebracht werden:
Dicke der MCrAlX-Schicht des wieder aufgearbeiteten Bauteils = übliche Dicke MCrAlX-Schicht eines neu hergestellten Bauteils plus S minus S'.

Das Pulver wird aufgrund der hohen Temperatur beim Hochgeschwindigkeits-Flammenspritzen teilweise aufgeschmolzen und bildet nach dem Erstarren eine feinkörnige Schicht 2 auf dem grobkörnigen Legierungsmaterial der Wand 1. Aufgrund der feinkörnigen Struktur erreicht die Schicht 2 nicht die hohe Kriechfestigkeit wie das Basismaterial 1.

Zum Erhöhen der Kriechfestigkeit der Schicht 2 wird das Bauteil einer Wärmebehandlung ausgesetzt, deren Temperatur ca. 10°C bis 150°C unterhalb der Solidustemperatur des Legierungsmaterials liegt.
Vorzugsweise beträgt der Temperaturunterschied zu der Solidustemperatur 50°C bis 150°C oder 100°C bis 150°C. Die Haltezeit, über die die Turbinenschaufel auf dieser Temperatur gehalten wird, hängt einerseits vom verwendeten Material und andererseits von der Temperatur selbst ab. Je näher die zur Anwendung kommende Temperatur an der Solidustemperatur des Beschichtungsmaterials liegt, desto kürzer kann die Haltezeit sein. Es ist daher vorteilhaft, wenn die zur Anwendung kommende Temperatur nur 10°C bis 50°C oder vorzugsweise 10°C bis 100°C oder vorzugsweise 10°C bis 25°C unterhalb der Solidustemperatur liegt. Diese Temperatur wird über einen Zeitraum gehalten, der bspw. von wenigen Stunden bis zu 24 Stunden oder gar darüber hinaus betragen kann.

Die Solidustemperaturen liegen für MCrAlX-Legierungen im Bereich um 1400°C. Daher beträgt dann die Mindesttemperatur, bei der die erfindungsgemäße Wärmebehandlung durchgeführt wird mindestens 1250°C, vorzugsweise mindestens 1300°C oder vorzugsweise 1350°C.

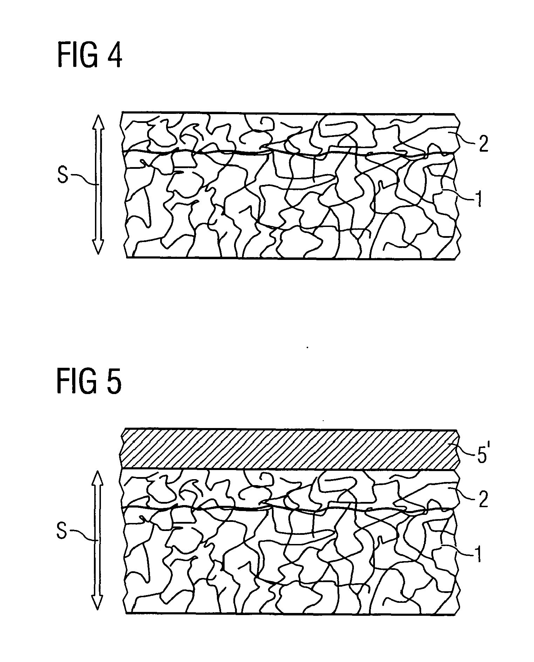

Während der Wärmebehandlung erfolgt eine Kristallisation der Schicht 2, in der eine grobkörnige Struktur des Beschichtungsmaterials entsteht. Dadurch wird die Kriechfestigkeit der Schicht 2 bei hohen Temperaturen deutlich erhöht und sie kann sogar diejenige des Basismaterials 1 erreichen, sodass im Hinblick auf die Kriechfestigkeit kein Unterschied zwischen der Schicht 2 und dem Basismaterial 1 mehr vorhanden ist. Dieser Zustand ist schematisch in Figur 4 dargestellt.

Auf das in seiner ursprünglichen Wandstärke S wiederhergestellte Bauteil wird schließlich eine neue wärmedämmende Beschichtung 5', die insbesondere der ursprünglichen Beschichtung 5 entspricht, aufgebracht. Als Beschichtung kommt im vorliegenden Ausführungsbeispiel eine MCrAlX-Beschichtung zur Anwendung, auf die dann ggf. noch eine Zirkonoxidschicht, vorzugsweise mit Yttrium stabilisiert, aufgebracht wird. Dieser Zustand ist schematisch in Figur 5 dargestellt. Nach dem Wiederbeschichten der Turbinenschaufel kann diese wieder in die Gasturbinenanlage eingebaut werden.

Sowohl bei neuen als auch bei wieder aufzuarbeitenden Bauteilen kann auch ohne dass die Wandstärke reduziert ist die Wärmebehandlung durchgeführt werden, um bei dicken MCrAlX-Schichten eine bestimmte erhöhte Festigkeit durch Kornvergrößerung zu erzielen.

Das Verfahren kann nicht nur bei Bauteilen mit einer Wand durchgeführt werden, sondern auch bei massiven Bauteilen ohne eine Wand, bei den ein Abtrag von Material erfolgte.

## Patentansprüche

1. Verfahren zum Erhöhen der Wandstärke eines aus einem Legierungsmaterial hergestellten Bauteils, insbesondere eines Turbinenbauteils,
in welchem Beschichtungsmaterial auf eine Bauteilwand (1) aufgebracht wird,
wobei das Beschichtungsmaterial nach dem Aufbringen auf die Bauteilwand (1) ein feinkörniges Gefüge aufweist und anschließend eine Wärmebehandlung erfolgt,
deren Temperatur und Haltedauer derart gewählt ist,
dass im aufgebrachten Beschichtungsmaterial ein grobkörniges Gefüge entsteht.

2. Verfahren nach Anspruch 1,
in dem die Temperatur der Wärmebehandlung 10°C - 150°C unter der Solidustemperatur des verwendeten Beschichtungsmaterials liegt.

3. Verfahren nach Anspruch 1,
in dem die Temperatur der Wärmebehandlung 10°C - 100°C unter der Solidustemperatur des verwendeten Beschichtungsmaterials liegt.

4. Verfahren nach Anspruch 1,
in dem die Temperatur der Wärmebehandlung 10°C - 50°C unter der Solidustemperatur des verwendeten Beschichtungsmaterials liegt.

5. Verfahren nach Anspruch 1,
in dem die Temperatur der Wärmebehandlung 50°C - 150°C unter der Solidustemperatur des verwendeten Beschichtungsmaterials liegt.

6. Verfahren nach Anspruch 1,
in dem die Temperatur der Wärmebehandlung 100°C - 150°C unter der Solidustemperatur des verwendeten Beschichtungsmaterials liegt.

7. Verfahren nach Anspruch 1,
**dadurch gekennzeichnet, dass**
in welchem ein artgleiches Legierungsmaterial als Beschichtungsmaterial auf der Bauteilwand (1) aufgebracht wird,

8. Verfahren nach Anspruch 1,
in dem das Legierungsmaterial als Beschichtungsmaterial auf die Bauteilwand (1) aufgespritzt wird.

9. Verfahren nach Anspruch 1,
**dadurch gekennzeichnet, dass**
eine MCrAlX-Legierung als Beschichtungsmaterial auf die Bauteilwand (1) aufgebracht wird.

10. Verfahren nach einem der vorangehenden Ansprüche,
in dem vor dem Aufbringen des Beschichtungsmaterials ein Abtragen eines Schichtmaterials (5) von der Bauteiloberfläche (3) derart erfolgt,
dass sich die Wandstärke der Bauteilwand (1) des Bauteils wenigstens lokal verringert.

11. Verfahren nach einem der vorangehenden Ansprüche,
in dem nach dem Durchführen der Wärmebehandlung ein Aufbringen oder Wiederaufbringen einer Beschichtung (5') auf die Bauteiloberfläche (3) erfolgt.
